# EUROPÄISCHE PATENTSCHRIFT

(11) **EP 1 733 946 B1**
(45) Veröffentlichungstag und Bekanntmachung des Hinweises auf die Patenterteilung: **03.10.2007**
(21) Anmeldenummer: 06009111.3
(22) Anmeldetag: 03.05.2006
(51) Int. Cl.: B62B 3/02, A47B 31/00

(54) **Kommissionierwagen**
Commissioning trolley
Chariot de commission

(30) Priorität: 13.06.2005 DE 202005009303 U
(43) Veröffentlichungstag der Anmeldung: 20.12.2006
(73) Patentinhaber: Wanzl Mettallwarenfabrik GmbH, 89336 Leipheim (DE)
(72) Erfinder: Schantini, Georg, 86480 Aletshausen (DE); Dietmar, Schaule, 86877 Walkertshofen (DE); Wanninger, Lothar, 87719 Mindelheim (DE)

(56) Entgegenhaltungen:
- DE-A1- 3 335 238
- DE-A1- 4 435 437
- DE-U1- 8 910 668
- DE-U1- 29 613 955
- US-A- 2 657 936

## Beschreibung

Die Erfindung betrifft einen Kommissionierwagen zur Aufnahme von Gegenständen mit Seitenteilen und mit Etagen zum Einhängen in die Seitenteile, wobei die Seitenteile je einen Rahmen aufweisen, und wobei an mindestens einem Rahmen eine Trittstufe vorgesehen ist.

Zum Stand der Technik zählt das deutsche Gebrauchsmuster 296 13 955 Ul. In diesem sind Verriegelungselemente beschrieben, die Untergestellhälften an einer Tischunterseite befestigen. Diese als Schnapper ausgeführten Verriegelungselemente dienen darüber hinaus dazu, dem Tisch mit ausgeklappten Untergestellhälften Stabilität zu verleihen.

Weiterhin sind Kommissionierwagen bekannt, die als Warenträger sowohl in SB-Geschäften als auch im Bereich der Logistik zum Einsatz kommen. Für ein besseres Befüllen der Etagen mit Waren sind manche Kommissionierwagen an ihren Seitenteilen zweckmäßigerweise mit Trittstufen ausgestattet. Ein solcher Kommissionierwagen ist in der deutschen Offenlegungsschrift DE 44 35 437 A1 beschrieben. Der Wagen weist Seitenteile auf. An einer der Seitenteile ist eine Trittstufe vorgesehen. Diese Trittstufe ist in Nichtgebrauchslage, im hochgeklappten Zustand, mit einem Verriegelungselement von einem Herunterfallen gesichert.

Schwierigkeiten treten dann auf, wenn eine Person die Trittstufe betritt. Oft kommt es vor, dass die Trittstufe bedingt durch ein Kippmoment in Richtung Wagen kippt. Das hat meist ein Herunterfallen der Ware zur Folge und führt unter Umständen zu Verletzungen von Personen.

Es ist daher Aufgabe der Erfindung, einen Kommissionierwagen der hier vorliegenden Gattung derart weiterzuentwickeln, dass das Kippmoment unterbunden ist und somit keine Gefahr für eine Person beim Betreten der Trittstufe besteht und weiterhin ein Herunterfallen von Waren verhindert ist. Zudem soll die Trittstufe bei Nichtverwendung Platz sparend angeordnet sein.

Die Lösung der Aufgabe besteht darin, dass die Trittstufe ein Verriegelungselement aufweist, das die Trittstufe im hochgeklappten Zustand vor einem Herunterfallen sichert und das der Trittstufe im ausgeklappten Zustand zusätzliche Stabilität verleiht.

Wie nachfolgend beschrieben, sind die Vorteile bei Verwendung eines Verriegelungselementes bedeutend. Durch den Einsatz des Verriegelungselementes bekommt die Trittstufe Stabilität, so dass für Personen, die die Trittstufe verwenden mehr Sicherheit gegeben ist. Weiterhin sichert das Verriegelungselement die Trittstufe gegen ein selbständiges Ausklappen im hochgeklappten Zustand. Dadurch ist eine Platzeinsparung zu realisieren.

Die Erfindung wird anhand von Ausführungsbeispielen näher erläutert. Es zeigt
- Fig. 1: einen Kommissionierwagen mit Seitenwänden, Etagen, Rahmen und einer Trittstufe in 3-D-Ansicht;
- Fig. 2: denselben Kommissionierwagen in ausschnittsweiser Seitenansicht mit der Trittstufe in hochgeklapptem Zustand und durch ein Verriegelungselement gesichert sowie
- Fig. 3: das Verriegelungselement der Trittstufe in detaillierter 3-D-Ansicht in ausgeklapptem Zustand.

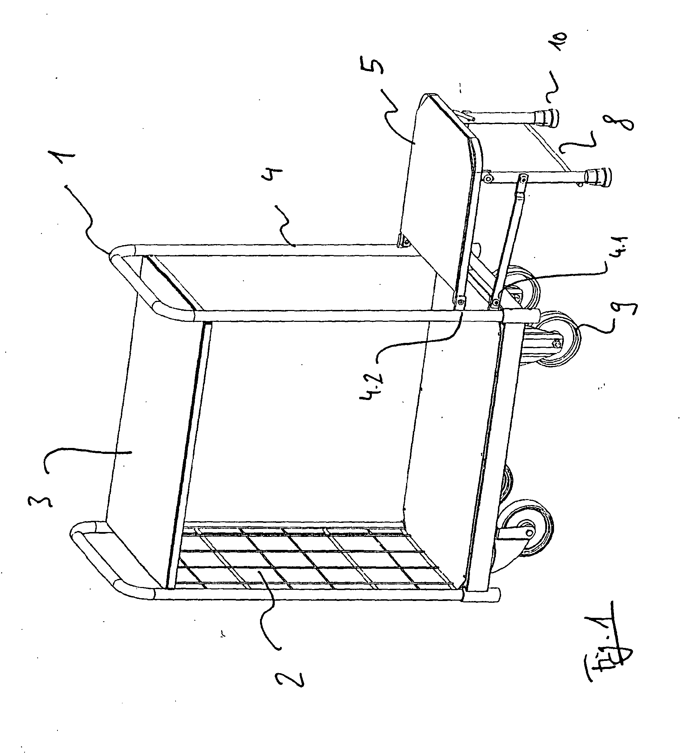

Fig. 1 zeigt in 3-D-Ansicht einen Kommissionierwagen 1 mit Seitenteilen 2 und einer Etage 3. An einem der beiden Rahmen 4 ist eine Trittstufe 5 angeordnet. Vorzugsweise ist die Trittstufe 5 an zwei Stellen 4.1 und 4.2 am Rahmen 4 gelenkig gelagert. Die Trittstufe 5 weist eine Querverstrebung 8 auf. Vorzugsweise weist der Kommissionswagen Rollen 9 auf. Die Trittstufe 5 ist mit Füßen 10 versehen.

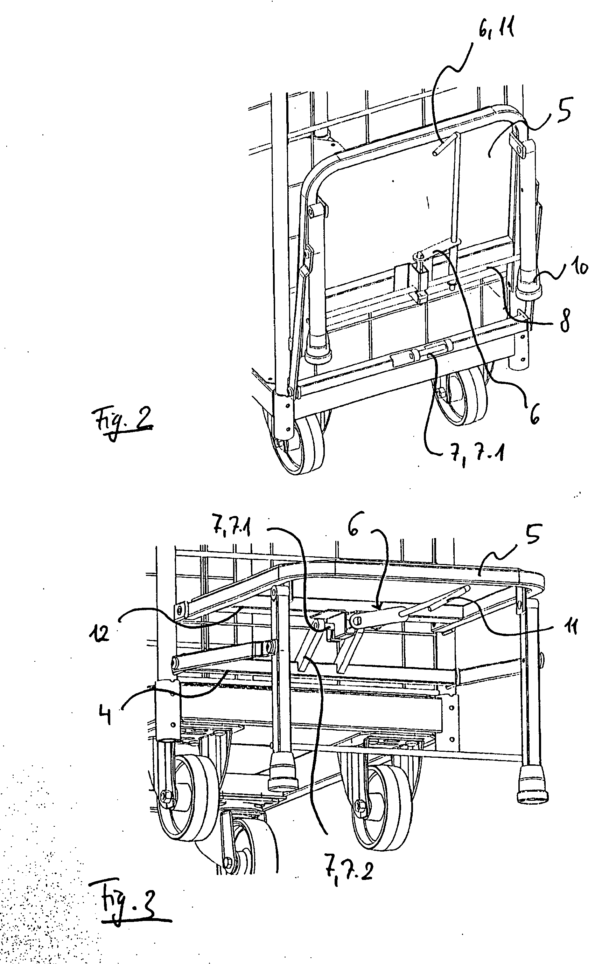

Fig. 2 zeigt in Seitenansicht denselben Kommissionierwagen 1 in ausschnittsweiser Seitenansicht. Die Trittstufe 5 ist in hochgeklapptem Zustand dargestellt. Um ein Herunterfallen zu verhindern, ist die Trittstufe 5 durch ein Verriegelungselement 6 gesichert. Das Verriegelungselement 6 weist einen Betätigungshebel 11. Der Betätigungshebel 11 ist mit der Hand zu betätigen. Der Betätigungshebel 11 lenkt hierbei die durch die Hand ausgelösten Kräfte um und löst die Verriegelung des Verriegelungselementes 6. Der Betätigungshebel 11 ist hierbei in verschiedenen Formen denkbar. Die dargestellte Lösung ist lediglich eine mögliche Variante.

Zum Verriegeln im hochgeklappten Zustand umschließt das Verriegelungselement 6 die Querverstrebung 8. Dadurch ist ein Lösen der Trittstufe 5 nur durch Betätigen des Betätigungshebels 11 möglich. Die Querverstrebung 8 weist vorzugsweise einen runden Querschnitt auf.

Die Füße 10 der Trittstufe 5 sind gelenkig angeordnet und im hochgeklappten Zustand Platz sparend entlang der Trittstufe 5 geklappt.

Der Kommissionierwagen weist weiterhin eine Öse 7 auf. Diese ist für die Sicherung der Trittstufe 5 im ausgeklappten Zustand vorgesehen. Vorzugsweise ist die Öse 7 an einem Teil des Rahmens 4 angeordnet. Auch die Öse 7 weist an ihrer Querverstrebung 7.1 für die Verriegelung mittels des Verriegelungselementes 6 einen runden Querschnitt auf.

In Fig. 3 ist das Verriegelungselement 6 der Trittstufe 5 in detaillierter 3-D-Ansicht in ausgeklapptem Zustand dargestellt. Das Verriegelungselement 6 umschließt die Querverstrebung 7.1 der Öse 7. Dadurch ist eine Stabilisierung der Trittstufe 5 erzielt. Verstärkt ist die Stabilisierung durch den Betätigungshebel 11 des Verriegelungselementes 6. Vorzugsweise weist die Öse 7 eine ortsfeste Halterung 7.2 für die Querverstrebung 7.1 auf. Die Öse 7 ist zweckmäßigerweise in geneigter Anordnung am Rahmen 4 des Kommissionierwagens 1 vorgesehen.

Das Verriegelungselement 6 ist durch eine Schraubverbindung an der Unterseite der Trittstufe 5, vorzugsweise dem Rahmen 12, ortsfest angebracht.

Für alle Figuren gilt, dass die Verriegelung der Querverstrebung 8 bzw. der Querverstrebung 7.1 jeweils durch Einrasten des Verriegelungselementes 6 nur durch manuellen Druck erfolgt. Zum Lösen der Verriegelung ist der Betätigungshebel 11 zu betätigen.

Ein solches Verriegelungselement 6 kann in einer weiterführenden Anwendung auch für andere Wagen, Container oder andere Geräte Verwendung finden.

## Patentansprüche

1. Kommissionierwagen (1) zur Aufnahme von Gegenständen mit Seitenteilen (2) und mit Etagen (3) zum Einhängen in die Seitenteile (2), wobei ein Seitenteil (2) mit einer Trittstufe (5) vorgesehen ist und wobei die Trittstufe (5) ein Verriegelungselement (6) aufweist, das die Trittstufe (5) im hochgeklappten Zustand von einem Herunterfallen sichert **gekennzeichnet,** dass ein Seitenteil (2) einen Rahmen aufweist, an dem die Trittstufe (5) befestigt ist und dass das Verriegelungselement (6) der Trittstufe (5) durch Verriegelung an einer Öse (7) des Rahmens (4) im ausgeklappten Zustand zusätzliche Stabilität verleiht.

2. Kommissionierwagen nach Anspruch 1, **dadurch gekennzeichnet, dass** an der Trittstufe (5) eine Querverstrebung (8) angeordnet ist.

3. Kommissionierwagen nach Anspruch 1, **dadurch gekennzeichnet, dass** das Verriegelungselement (6) einen Betätigungshebel (11) aufweist.

## Claims

1. A commissioning trolley (1) for receiving objects, with side parts (2) and with shelves (3) for engagement in the side parts (2), wherein one side part (2) is provided with a step (5) and wherein the step (5) has a locking member (6) which secures the step (5) against falling down when it is folded up, **characterised in that** a side part (2) has a frame to which the step (5) is fixed and **in that** the locking member (6) is locked onto an eye (7) of the frame (4) in order to impart additional stability to the step (5) in its unfolded position.

2. A commissioning trolley according to claim 1, **characterised in that** a cross strut (8) is arranged on the step (5).

3. A commissioning trolley according to claim 1, **characterised in that** the locking member (6) has an operating lever (11).

## Revendications

1. Chariot (1) de préparation de commandes destiné à recevoir des objets, avec des parties latérales (2) et avec des étagères (3) à accrocher dans les parties latérales (2), sachant qu'il est prévu une partie latérale (2) dotée d'un marchepied (5) et sachant que le marchepied (5) présente un élément de verrouillage (6) qui bloque le marchepied (5) dans l'état relevé et l'empêche de retomber, **caractérisé en ce qu'**une partie latérale (2) présente un cadre sur lequel est fixé le marchepied (5) et **en ce que** l'élément de verrouillage (6) confère un surcroît de stabilité au marchepied (5) par verrouillage sur un crampon (7) du cadre (4) dans l'état déployé.

2. Chariot de préparation de commandes selon la revendication 1, **caractérisé en ce qu'**une entretoise transversale (8) est disposée sur le marchepied (5).

3. Chariot de préparation de commandes selon la revendication 1, **caractérisé en ce que** l'élément de verrouillage (6) présente un levier d'actionnement (11).
